# EUROPÄISCHE PATENTANMELDUNG

(11) **EP 2 597 072 A2**
(43) Veröffentlichungstag der Anmeldung: **29.05.2013**
(21) Anmeldenummer: 12193327.9
(22) Anmeldetag: 20.11.2012
(51) Int. Cl.: C04B 14/06, C04B 30/00, C04B 30/02

(54) **Dämmstoff, Dämmelement sowie Verfahren zur Herstellung eines Dämmstoffs oder Dämmelements**

(30) Priorität: 22.11.2011 DE 102011119029
(71) Anmelder: STO AG, 79780 Stühlingen (DE)
(72) Erfinder: Duttlinger, Werner, 79848 Bonndorf (DE); Weier, Andreas, 78647 Trossingen (DE); Tritschler, Kevin, 77859 Schluchsee (DE); Isele, Robert, 79777 Berau (DE); Hitzler, Martin, 78244 Gottmadingen (DE)
(74) Vertreter: Gottschalk, Matthias

(57) **Zusammenfassung**

Die Erfindung betrifft einen Dämmstoff zur Herstellung eines Dämmelementes sowie ein aus einem solchen Dämmstoff hergestelltes Dämmelement, wobei der Dämmstoff Aerogel-Partikel und wenigstens ein anorganisches und/oder organisches Bindemittel enthält. Erfindungsgemäß beträgt der Bindemittelanteil < 3 Vol.-%, vorzugsweise < 2,5 Vol.-%, weiterhin vorzugsweise < 2 Vol.-% bezogen auf das Gesamtvolumen des Dämmstoffs.

Ferner betrifft die Erfindung ein Verfahren zur Herstellung eines Aerogel-Partikel und wenigstens ein anorganisches und/oder organisches Bindemittel enthaltenden Dämmstoffs bzw. Dämmelements.

## Beschreibung

Die Erfindung betrifft einen Dämmstoff zur Herstellung eines Dämmelementes, das insbesondere zur Schall- und/oder Wärmedämmung von Gebäuden einsetzbar ist sowie ein Dämmelement, das aus einem solchen Dämmstoff hergestellt ist. Der Dämmstoff enthält Aerogel-Partikel sowie wenigstens ein anorganisches und/oder organisches Bindemittel. Des Weiteren betrifft die Erfindung ein Verfahren zur Herstellung eines Aerogel-Partikel und wenigstens ein anorganisches und/oder organisches Bindemittel enthaltenden Dämmstoffs oder Dämmelements.

Unter "Dämmstoff" wird vorliegend ein homogen aufgebautes Dämmmaterial in Form einer Matte, Platte oder eines Blocks verstanden, das zur Herstellung eines erfindungsgemäßen Dämmelementes ggf. nur noch zugeschnitten werden muss. Das Dämmelement besitzt dann ebenfalls einen homogenen Aufbau, d. h. es besteht durchgehend aus diesem Dämmstoff. Ein erfindungsgemäßes "Dämmelement" kann neben einem homogenen Aufbau aber auch einen mehrschichtigen Aufbau besitzen und den erfindungsgemäßen Dämmstoff in einer oder mehreren Schichten umfassen. Die mehreren Schichten eines mehrschichtig aufgebauten erfindungsgemäßen Dämmelementes können in einem Formgebungsprozess oder in aufeinander folgenden Prozessen, beispielsweise durch nachträgliches Beschichten eines erfindungsgemäßen Dämmstoffs bzw. Dämmelementes, hergestellt werden bzw. hergestellt worden sein. Alternativ oder ergänzend kann ein erfindungsgemäßer Dämmstoff oder ein erfindungsgemäßes Dämmelement, das einen solchen Dämmstoff umfasst, wenigstens eine mittels eines Gewebes oder Vlieses armierte und/oder kaschierte Außenseite besitzen. Die Armierung und/oder Kaschierung kann wiederum im selben Formgebungsprozess oder nachträglich aufgebracht werden bzw. aufgebracht worden sein.

### Stand der Technik

Dämmstoffe, welche Aerogel-Partikel enthalten, sind aus dem Stand der Technik bekannt. Aufgrund der besonderen Porosität der Aerogel-Partikel weisen derartige Dämmstoffe eine niedrige Wärmeleitfähigkeit auf, welche sich in hervorragenden Wärmedämmwerten bei gleichzeitig geringen Dämmstoffdicken niederschlägt. Beispielsweise kann die Dämmstoffdicke bei Verwendung eines auf Aerogel-Partikel basierenden Dämmstoffs im Vergleich zu einem Wärmedämmelement aus Polystyrol-Hartschaum halbiert werden.

Ein Silica-Aerogel-Partikel enthaltender Dämmstoff sowie ein Verfahren zur Herstellung eines solchen Dämmstoffs gehen zum Beispiel aus der EP 0 340 707 A2 hervor. Die Partikel sind mittels mindestens eines organischen und/oder anorganischen Bindemittels miteinander verbunden. Hierzu werden die Partikel zunächst mit dem Bindemittel beschichtet und/oder vermischt, in eine Form eingebracht und dann ausgehärtet. Das Aushärten des Gemisches in der Form erfolgt je nach Art des Bindemittels durch Erwärmen, Verdampfen des verwendeten Lösungs- oder Dispersionsmittels oder - bei Verwendung eines Schmelzklebers - durch Abkühlen des Gemisches. Auf diese Weise sollen sich Dämmstoffe herstellen lassen, die eine Dichte 0,1 bis 0,4 g/cm³ und eine Wärmeleitfähigkeit zwischen 0,028 und 0,048 W/(mK) aufweisen.

Die Wärmeleitfähigkeit derartiger Dämmstoffe ist jedoch unbefriedigend. Daher wurden in der EP 0 489 319 A2 bereits Verbundschaumstoffe vorgeschlagen, welche Silica-Aerogel-Partikel enthalten, die in einer Matrix aus Styrolpolymerisatschaumstoff eingebettet sind. Der Styrolpolymerisatschaumstoff ersetzt das Bindemittel und soll auf diese Weise eine Verringerung der Wärmeleitfähigkeit bewirken. Die vorgeschlagenen Verbundschaumstoffe erreichen zwar eine Wärmeleitfähigkeit von 0,020 W/(mK), die Styrolpolymerisatschaumstoff-Matrix vermag jedoch keinen ausreichend stabilen Verbund der Aerogel-Partikel untereinander zu bewirken.

Der Erfindung liegt die Aufgabe zugrunde, einen Dämmstoff anzugeben, der im Vergleich zu den bekannten Dämmstoffen hervorragende Dämmwerte und zugleich gute mechanische Eigenschaften besitzt. Insbesondere soll ein stabiler Verbund der Aerogel-Partikel untereinander gewährleistet sein, so dass ein aus dem Dämmstoff hergestelltes Dämmelement leicht handhabbar bzw. baustellentauglich ist. Ferner soll der Dämmstoff kostengünstig herstellbar sein.

Darüber hinaus soll ein Verfahren zur kostengünstigen Herstellung eines Aerogel-Partikel und wenigstens ein anorganisches und/oder organisches Bindemittel enthaltenden Dämmstoffs angegeben werden.

Die Aufgaben werden gelöst durch einen Dämmstoff mit den Merkmalen des Anspruchs 1, ein Dämmelement mit den Merkmalen des Anspruchs 9 sowie ein Verfahren zur Herstellung eines Dämmstoffs oder eines Dämmelements mit den Merkmalen des Anspruchs 12. Vorteilhafte Weiterbildungen der Erfindung sind in den jeweiligen Unteransprüchen angegeben.

### Offenbarung der Erfindung

Der zur Herstellung eines Dämmelementes vorgeschlagene Dämmstoff enthält Aerogel-Partikel und wenigstens ein anorganisches und/oder organisches Bindemittel. Erfindungsgemäß beträgt der Bindemittelanteil weniger als 3 Vol.-%, vorzugsweise weniger als 2,5 Vol.-%, weiterhin vorzugsweise weniger als 2 Vol.-% bezogen auf das Gesamtvolumen des Dämmstoffs. Der Volumenanteil des Bindemittels bezogen auf das Gesamtvolumen ist demnach - insbesondere im Vergleich zu den aus dem Stand der Technik bekannten Dämmstoffen - gering, was jedoch überraschenderweise nicht zu einer Verschlechterung der mechanischen Eigenschaften des Dämmstoffs führt. Zudem wirkt sich der vorgeschlagene geringe Bindemittelanteil positiv auf die Wärmeleitfähigkeit des Dämmstoffs aus. Der erfindungsgemäße Dämmstoff weist demnach sowohl hervorragende Wärmedämmeigenschaften als auch sehr gute mechanische Eigenschaften auf. Vorzugsweise liegt der Bindemittelanteil nicht unter 0,4 Vol.-% bezogen auf das Gesamtvolumen des Dämmstoffs.

Aerogel-Partikel weisen bekanntermaßen eine geringe Stabilität gegenüber Scherkräften auf, so dass Aerogel-Partikel enthaltende Dämmstoffe leicht auseinander brechen. Um eine ausreichende Stabilität derartiger Dämmstoffe zu gewährleisten, werden die Aerogel-Partikel daher üblicherweise in einer BindemittelMatrix gebunden. Es liegt nahe, den Bindemittelanteil zu erhöhen, um die mechanischen Eigenschaften derartiger Dämmstoffe zu verbessern. Abweichend hiervon wurde jedoch der Bindemittelanteil zur Herstellung des erfindungsgemäßen Dämmstoffs verringert. Dennoch weist dieser Dämmstoff gute und zum Teil sogar verbesserte mechanische Eigenschaften als die bekannten Dämmstoffe auf. Der geringe Bindemittelanteil bewirkt einen zumindest punktuellen Kontakt der Aerogel-Partikel untereinander, so dass ein stabiler Verbund gewährleistet ist.

Aufgrund des geringen Bindemittelanteils bildet das Bindemittel demnach vorliegend keine zusammenhängende, die Partikel vollständig umhüllende Matrix entsprechend dem Stand der Technik aus. Auf diese Weise wird der Ausbildung von Bindemittelstegen entgegengewirkt, welche einen unerwünschten Wärmeabfluss durch den Dämmstoff begünstigen würden. Denn die Wärmeleitfähigkeit des Bindemittels liegt deutlich über der der Aerogel-Partikel. Zudem hätte eine auf einen hohen Bindemittelanteil zurückzuführende, die Aerogel-Partikel umhüllende Matrix eine Verschlechterung der Wasserdampfdurchlässigkeit zur Folge, so dass der vorgeschlagene geringe Bindemittelanteil auch diesbezüglich Vorteile mit sich bringt. Ein aus einem erfindungsgemäßen Dämmstoff hergestelltes Dämmelement ist wasserdampfdiffusionsoffen und demzufolge insbesondere zur Innendämmung von Gebäudewänden und -decken geeignet.

Eine bevorzugte Ausführungsform eines erfindungsgemäßen Dämmstoffs enthält ferner expandierte und/oder extrudierte Styrolpolymerisat-Partikel. Die Styrolpolymerisat-Partikel dienen als Füllstoff und ersetzen damit einen Teil der sehr teuren Aerogel-Partikel. Auf diese Weise können die Herstellungskosten gesenkt werden. Des Weiteren wird durch die Zugabe der Styrolpolymerisat-Partikel die mechanische Festigkeit des Dämmstoffs verbessert, da Styrolpolymerisat-Partikel im Vergleich zu Aerogel-Partikeln scherstabiler sind.

Weiterhin bevorzugt sind die Partikelgrößen der Aerogel-Partikel und der Styrolpolymerisat-Partikel - sofern enthalten - derart gewählt, dass sich kleinere Partikel in die sich zwischen den größeren Partikeln ausbildenden Zwischenräume setzen. Auf diese Weise wird das Zwickelvolumen im Dämmstoff verringert. Dies hat zur Folge, dass der Bildung von Bindemittelnestern, d.h. mit Bindemittel gefüllten größeren und ggf. zusammenhängenden Zwischenräumen, entgegengewirkt wird, welche die Wärmedämmeigenschaften des Dämmstoffs verschlechtern würden. Des Weiteren wird vorgeschlagen, dass die expandierten und/oder extrudierten Styrolpolymerisat-Partikel im Dämmstoff gleichmäßig verteilt angeordnet ist. Der Dämmstoff ist demnach homogen aufgebaut und weist über seine gesamte Stärke gleich bleibende Eigenschaften auf. Die gleichmäßig verteilt im Dämmstoff angeordneten Styrolpolymerisat-Partikel dienen insbesondere der Verringerung des Zwickelvolumens, um zu verhindern, dass Bindemittelnester ausgebildet werden.

Vorteilhafterweise ist der Dämmstoff bei der Herstellung verdichtet worden, so dass der Hohlraumanteil < 40 Vol.-%, vorzugweise < 20 Vol.-%, weiterhin vorzugsweise < 10 Vol.-% bezogen auf das Gesamtvolumen des Dämmstoffs beträgt. Der Begriff "Hohlraumanteil" bezeichnet vorliegend das verbleibende, mit Luft gefüllte Zwickelvolumen zwischen den Aerogel-Partikeln.

Im Rahmen von Versuchen hat sich überraschenderweise gezeigt, dass eine Reduzierung des Hohlraumanteils, d.h. des mit Luft gefüllten Zwickelvolumens zwischen den einzelnen Aerogel-Partikeln, zu einer Verbesserung der Wärmedämmeigenschaften des Dämmstoffs führt. Der Hohlraumanteil wird vorliegend insbesondere dadurch reduziert, dass die Ausgangsstoffe bei der Herstellung des Dämmstoffs unter Einwirkung von Druck verdichtet werden. Ergänzend kann eine günstige Größenverteilung der Aerogel-Partikel gewählt werden, die kleinere und größere Aerogel-Partikel umfasst, so dass sich kleinere Aerogel-Partikel in die Zwischenräume zwischen die größeren Aerogel-Partikeln setzen. In einer entsprechend dichten Packung der Aerogel-Partikel behindert das nanoporige Aerogel den Wärmeabfluss. Der erfindungsgemäße Dämmstoff weist demzufolge hervorragende Wärmedämmeigenschaften auf.

Bevorzugt beträgt die Wärmeleitfähigkeit nach DIN EN 12667 des Dämmstoffs ≤ 0,022 W/(mK), vorzugsweise ≤ 0,020 W/(mK), weiterhin vorzugsweise ≤ 0,018 W/(mK) beträgt. Weiterhin bevorzugt liegt die Wärmeleitfähigkeit nur geringfügig über der der Aerogel-Partikel, die in der Literatur mit etwa 0,012 W/(mK) angegeben wird.

Neben hervorragenden Wärmedämmeigenschaften weist ein erfindungsgemäßer Dämmstoff zudem gute mechanische Eigenschaften, insbesondere Festigkeit, auf. Zum Beispiel beträgt die Querzugfestigkeit nach DIN EN 1607 des Dämmstoffs bevorzugt ≥ 10kPa, vorzugsweise ≥ 20 kPa, weiterhin vorzugsweise ≥25 kPa. Die Biegezugfestigkeit nach DIN EN 12089 des Dämmstoffs beträgt bevorzugt ≥ 15 kPa, vorzugsweise ≥ 20 kPa, weiterhin vorzugweise ≥ 25 kPa und die Druckfestigkeit bei 10% Stauchung nach DIN EN 826 beträgt bevorzugt ≥ 80 kPa, vorzugsweise ≥ 120 kPa, weiterhin vorzugsweise ≥ 150 kPa. Die Festigkeit des Dämmstoffs stellt ein wesentliches Unterscheidungsmerkmal gegenüber den aus dem Stand der Technik bekannten, Aerogel-Partikel enthaltenden Dämmstoffen dar.

Vorteilhafterweise besteht zumindest ein Teil der Aerogel-Partikel aus wenigstens einem Aerogel-Recyclat. Als Aerogel-Recyclat wird vorliegend ein Material verstanden, dass insbesondere aus Reststücken eines Aerogel-Partikel enthaltenden Dämmstoffs gewonnen wird. Bei den Reststücken kann es sich um Bruchmaterial oder Schnittreste handeln, das/die üblicherweise bei der Herstellung Aerogelbasierter Dämmstoffe bzw. Dämmelemente anfällt/anfallen. Derartige Bruch- und/oder Reststücke können auf diese Weise einer Verwertung zugeführt werden. Gleiches gilt für nicht verkaufsfähige Dämmstoffe oder Dämmelemente aus Fehlchargen, aus denen ebenfalls Aerogel-Recyclat zur Herstellung des erfindungsgemäßen Dämmstoffs gewonnen werden kann. Die Verwendung eines Aerogel-Recyclats ermöglicht eine Reduzierung der Herstellungskosten, da das Recyclat deutlich günstiger als entsprechendes frisches Ausgangsmaterial ist. Zudem erweist sich die Verwendung eines Recyclats unter ökologischen Gesichtspunkten als vorteilhaft, da auf diese Weise Abfälle einer Wiederverwertung zugeführt werden können. Die Verwendbarkeit eines Aerogel-Recyclats hängt jedoch von der Aufbereitung des Materials ab.

Zur Aufbereitung bzw. Gewinnung des Recyclats wird das Aerogel-Partikel enthaltende Material zunächst zerkleinert, bis die Partikel eine definierte Korngröße aufweisen. Dem Recyclat werden dann vorzugsweise frische Aerogel-Partikel zugegeben. Alternativ kann aber auch auf die Zugabe frischer Aerogel-Partikel verzichtet und ausschließlich Aerogel-Recyclat verwendet werden. Dies hängt unter anderem von der Qualität des Recyclats ab. Das Recyclat kann beispielsweise verunreinigt sein. Insbesondere können dem Recyclat Bindemittel-, Füllstoff- und/oder Additivreste anhaften. Derartige Verunreinigungen müssen sich jedoch nicht zwangsläufig negativ auswirken. Beispielsweise können - je nach Art des jeweils verwendeten Bindemittels - anhaftende Bindemittelreste die Qualität des Recyclats bzw. des hieraus hergestellten Dämmstoffs auch verbessern. Weisen die Recyclat-Partikel beispielsweise Bindemittelreste auf, die insbesondere bei Wärmeeinwirkung erneut erweichen und anschließend wieder aushärten, kann der Verbund der Partikel untereinander sogar verbessert werden. Ein auf diese Weise erhaltener Dämmstoff weist demzufolge eine höhere Stabilität bzw. eine höhere mechanische Festigkeit als ein Dämmstoff auf, der - bei Zugabe der gleichen Menge Bindemittel - ausschließlich aus frischen Aerogel-Partikeln hergestellt wurde. Somit kann bei Verwendung eines geeigneten Aerogel-Recyclats ferner Bindemittel eingespart werden.

Die Vorteile eines erfindungsgemäßen Dämmstoffs kommen insbesondere bei einem Dämmelement zum Tragen. Daher wird weiterhin bevorzugt die Verwendung eines erfindungsgemäßen Dämmstoffs zur Herstellung eines Dämmelementes vorgeschlagen, das insbesondere zur Schall- und/oder Wärmedämmung von Gebäudewänden und/oder -decken einsetzbar ist.

Ferner wird ein Dämmelement zur Schall- und/oder Wärmedämmung von Gebäudewänden oder -decken aus einem erfindungsgemäßen Dämmstoff vorgeschlagen. Das heißt, dass dieses Dämmelement unter Verwendung eines erfindungsgemäßen Dämmstoffs hergestellt worden ist. Insofern kann das Dämmelement einen homogenen oder schichtweisen Aufbau besitzen, wobei im letztgenannten Fall der erfindungsgemäße Dämmstoff in wenigstens einer Schicht enthalten ist. Das heißt, dass wenigstens eine Schicht eines erfindungsgemäßen Dämmelementes Aerogel-Partikel und wenigstens ein anorganisches und/oder organisches Bindemittel enthält. Optional können weitere Stoffe, insbesondere Füllstoffe, wie beispielsweise expandierte und/oder extrudierte Styrolpolymerisat-Partikel, enthalten sein. Ein solches Dämmelement ist sowohl im Außen- als auch im Innenbereich einsetzbar.

In Weiterbildung der Erfindung enthält das Dämmelement expandierte und/oder extrudierte Styrolpolymerisat-Partikel, von denen zumindest ein Teil eine Schicht, insbesondere eine außenliegende Deckschicht, ausbildet. Die Schicht, vorzugsweise Deckschicht, dient der Verbesserung der mechanischen Eigenschaften. Insbesondere wird durch eine derartige Schicht die Formstabilität eines aus einem erfindungsgemäßen Dämmstoff hergestellten Dämmelements erhöht. Dieses ist somit leichter zu handhaben, so dass gleichzeitig die Applikationssicherheit steigt. Vorteilhafterweise weist das Dämmelement an wenigstens zwei sich gegenüberliegenden Außenseiten eine Styrolpolymerisat-Partikel enthaltende Deckschicht auf.

Um die mechanische Stabilität einer Styrolpolymerisat-Partikel enthaltenden Schicht, insbesondere Deckschicht weiter zu erhöhen, wird ferner vorgeschlagen, dass die Deckschicht wenigstens ein Bindemittel enthält. Das Bindemittel bewirkt einen stabilen Verbund der Styrolpolymerisat-Partikel sowohl untereinander, als auch mit den in der Deckschicht und/oder in der angrenzenden weiteren Schicht enthaltenen Aerogel-Partikeln. Alternativ kann der Verbund der Styrolpolymerisat-Partikel auch durch thermisches Verkleben bewirkt werden. Die Zugabe eines Bindemittels zur Ausbildung der Styrolpolymerisat-Partikel enthaltenden Schicht ist dann entbehrlich. Beim thermischen Verkleben erfolgt das Aushärten des Dämmstoffs bzw. des Dämmelements vorzugsweise bei Temperaturen von 80°C bis 110°C, weiterhin vorzugsweise bei Temperaturen von 85°C bis 95°C.

Um die Haptik des Dämmelements zu verbessern und/oder die Herstellungskosten zu senken, wird ferner vorgeschlagen, dass die Styrolpolymerisat-Partikel enthaltende Schicht, insbesondere Deckschicht, weitgehend frei von Aerogel-Partikeln ist. Sofern es sich bei dieser Schicht um eine Deckschicht handelt, weist die Abwesenheit von Aerogel-Partikel ferner den Vorteil auf, dass die Oberfläche der Deckschicht schleifbar ist. Das Schleifen der Oberfläche ist in der Regel dann erforderlich, wenn die Oberfläche der Aufnahme einer Beschichtung, insbesondere einer ein- oder mehrlagigen Putz- und/oder Farbbeschichtung dienen soll. Dies ist beispielsweise der Fall, wenn das Dämmelement innerhalb eines Wärmedämmverbundsystems einsetzbar sein soll.

Vorzugsweise besitzt die Styrolpolymerisat-Partikel enthaltende Schicht, insbesondere Deckschicht, eine Mindestschichtstärke von 5 mm. In Abhängigkeit von der Gesamtstärke des Dämmelementes kann die Schichtstärke der Schicht, insbesondere Deckschicht, bis zu 30 mm betragen. Die angegebene Mindestschichtstärke gewährleistet gute mechanische Eigenschaften des schichtweise aufgebauten Dämmelements. Zugleich wird die Gesamtstärke des Dämmelements nur unwesentlich erhöht. Wird alternativ die Schichtstärke der Aerogel-Partikel enthaltenden Schicht entsprechend der Schichtstärke der Styrolpolymerisat-Partikel enthaltenden Schicht verringert, führt die angegebene geringe Schichtstärke der Styrolpolymerisat-Partikel enthaltenden Schicht nur zu einer geringfügigen Erhöhung der Wärmeleitfähigkeit des Dämmstoffs. Die hervorragenden Wärmedämmeigenschaften des Dämmelements bleiben somit erhalten.

Des Weiteren wird ein Verfahren zur Herstellung eines erfindungsgemäßen Dämmstoffs und/oder eines erfindungsgemäßen Dämmelementes umfassend einen solchen Dämmstoff vorgeschlagen. Bei diesem Verfahren werden die Ausgangsstoffe, umfassend wenigstens ein Bindemittel sowie Aerogel-Partikel und/oder expandierte und/oder extrudierte Styrolpolymerisat-Partikel, homogen gemischt oder in unterschiedlichen Mischungsverhältnissen schichtweise in eine Form eingebracht und unter Einwirkung von Druck und/oder Wärme getrocknet und/oder ausgehärtet. Beim schichtweisen Einbringen in die Form können die Mischungsverhältnisse der Ausgangsstoffe beispielsweise derart gewählt werden, dass eine erste Schicht keine Styrolpolymerisat-Partikel und eine hieran angrenzende weitere Schicht keine Aerogel-Partikel enthält. Insbesondere kann auf diese Weise ein mehrschichtiges Dämmelement hergestellt werden, das zumindest eine Aerogel-Partikel und wenigstens ein Bindemittel enthaltende erste Schicht und eine Styrolpolymerisat-Partikel enthaltende weitere Schicht umfasst, wobei es sich bei der weiteren Schicht vorzugsweise um eine außen liegende Deckschicht handelt, die weiterhin vorzugsweise weitgehend frei von Aerogel-Partikeln ist.

Bei einem mehrschichtig aufgebauten Dämmelement, das einen erfindungsgemäßen Dämmstoff umfasst, bildet dieser wenigstens eine der mehreren Schichten aus. Vorzugsweise bildet der erfindungsgemäße Dämmstoff aufgrund der enthaltenen Aerogel-Partikel eine Kernschicht des Dämmelementes aus. Die Kernschicht kann einseitig oder zweiseitig von einer außenliegenden Deckschicht abgedeckt sein. Die Herstellung eines derart mehrschichtig aufgebauten Dämmelementes erfolgt vorzugsweise in einem Formgebungsprozess, indem beispielsweise unterschiedliche Ausgangsstoffe enthaltende Mischungen schichtweise in eine Form eingebracht und unter Einwirkung von Druck und/oder Wärme getrocknet bzw. ausgehärtet werden. Dies hat nicht nur Vorteile in Bezug auf die Herstellungskosten, sondern ferner in Bezug auf die mechanische Stabilität des auf diese Weise hergestellten mehrschichtigen Dämmelementes. Denn während des Trocknens bzw. Aushärtens unter Einwirkung von Druck und/oder Wärme wird ein stabiler Verbund nicht nur der Ausgangsstoffe innerhalb einer Schicht, sondern auch der Schichten untereinander erreicht.

Zur Herstellung eines homogen aufgebauten Dämmstoffs oder Dämmelements werden als Ausgangsstoffe bevorzugt 70-95 Gew.-%, vorzugsweise 80-90 Gew.-%, weiterhin vorzugsweise 82-88 Gew.-% Aerogel-Partikel und 5-30 Gew.-%, vorzugsweise 10-20 Gew.-%, weiterhin vorzugsweise 12-18 Gew.-% wenigstens eines anorganischen und/oder organischen Bindemittels jeweils bezogen auf die Trockenmasse der Ausgangsstoffe verwendet. Bezogen auf die Trockenmasse der Ausgangsstoffe überwiegt demnach der Anteil der Aerogel-Partikel gegenüber dem Anteil an Bindemittel deutlich. Der geringe Bindemittelanteil bewirkt, dass die sich zwischen den Aerogel-Partikeln ausbildenden Bindemittelstege aufgrund ihrer geringen Masse die Wärmeleitung durch den Dämmstoff nur geringfügig erhöhen. Der Bindemittelanteil ist jedoch ausreichend hoch gewählt, um die mechanische Stabilität des Dämmstoffs bzw. des hieraus hergestellten Dämmelementes zu gewährleisten. Bevorzugt werden Aerogel-Partikel verwendet, deren Schüttdichte 65-100 kg/m³ beträgt.

Zur Herstellung eines mehrschichtig aufgebauten Dämmelementes wird vorgeschlagen, dass zur Ausbildung einer ersten Schicht 70-95 Gew.-%, vorzugsweise 80-90 Gew.-%, weiterhin vorzugsweise 82-88 Gew.-% Aerogel-Partikel und 5-30 Gew.-%, vorzugsweise 10-20 Gew.-%, weiterhin vorzugsweise 12-18 Gew.-% Bindemittel und zur Ausbildung einer Deckschicht 70-100 Gew.-%, vorzugsweise 80-100 Gew.-%, weiterhin vorzugsweise 90-100 Gew.-% expandierte und/oder extrudierte Styrolpolymerisat-Partikel und 0-30 Gew.-%, vorzugsweise 0-20 Gew.-%, weiterhin vorzugsweise 0-10 Gew.-% Bindemittel -jeweils bezogen auf die Trockenmasse der Ausgangsstoffe der jeweiligen Schicht- gemischt und schichtweise in eine Form eingebracht werden. Die in die Form eingebrachten Mischungen werden dann unter Druck und/oder Wärme ausgehärtet. Die Ausgangsstoffe der ersten Schicht entsprechen den Ausgangsstoffen zur Herstellung eines homogen aufgebauten erfindungsgemäßen Dämmstoffs oder Dämmelements. Das erfindungsgemäße mehrschichtig aufgebaute Dämmelement umfasst demnach wenigstens eine Schicht aus einem erfindungsgemäßen Dämmstoff. Bevorzugt werden wiederum Aerogel-Partikel verwendet, deren Schüttdichte 65-100 kg/m³ beträgt.

Des Weiteren bevorzugt werden Aerogel-Partikel verwendet, die wenigstens 10 Gew.-%, vorzugsweise wenigstens 25 Gew.-%, weiterhin vorzugsweise wenigstens 50 Gew.-% wenigstens eines Aerogel-Recyclats bezogen auf das Gesamtgewicht der Aerogel-Partikel enthalten. Das Aerogel-Recyclat wird zuvor durch Brechen, Schneiden, Mahlen und/oder Sieben in Partikel definierter Größe zerkleinert. Die Zerkleinerung erfolgt vorzugsweise in einem mechanischen Brecher, der weiterhin vorzugsweise derart eingestellt ist, dass kleinere Bruchstücke erzeugt werden, ohne dass diese jedoch zermahlen werden. Vorteilhafterweise verfügt der Brecher über einen integrierten Siebauslass. Alternativ oder ergänzend kann das zerkleinerte Recyclat auch durch ein separates Sieb passiert werden, um insbesondere das Recyclat von Feinanteilen zu befreien. Denn mit dem Feinanteil steigt der Bedarf an Bindemittel, um einen stabilen Verbund der Partikel im Dämmstoff zu gewährleisten. Eine erhöhte Bindemittelzugabe erhöht jedoch - wie bereits aufgezeigt - die Wärmeleitfähigkeit des derart hergestellten Dämmstoffs.

Der Zerkleinerung des Recyclats kann der Verfahrensschritt der Reinigung vorausgehen, um beispielsweise das zu recyclierende Material von Schmutz und/oder anderen Bestandteilen, wie beispielsweise Geweben, Vliesen oder dergleichen zu befreien. Anhaftende Bindemittelreste müssen ggf. nicht entfernt werden. Dies gilt insbesondere, wenn es sich bei den anhaftenden Bindemittelresten um solche eines thermoplastischen Dispersionsbindemittels handelt, da dieses unter Wärmeeinwirkung erneut erweicht und danach wieder aushärtet. Derartige Bindemittelreste können demnach den Verbund der Aerogel-Partikel untereinander verbessern. Darüber hinaus kann die Zugabe frischen Bindemittels reduziert werden. Als Bindemittel findet vorzugsweise wenigstens ein organisches Bindemittel, insbesondere ein wasserbasiertes duroplastisches Bindemittel, wie beispielsweise Epoxidharz oder Polyurethan, und/oder ein Dispersionsbindemittel auf Basis thermoplastischer Acrylat-, Styrolacrylat- oder Styrolbutylacrylatpolymere, Verwendung. Der Feststoffanteil des organischen Bindemittels besitzt vorzugsweise eine Rohdichte von 900-1200 kg/m³. Im Unterschied zu anorganischen bzw. mineralischen Bindemitteln weisen organische Bindemittel regelmäßig eine höhere Bindekraft auf, so dass der Anteil an Bindemittel weiter reduziert werden kann. Das organische Bindemittel wird vorzugsweise in Wasser gelöst, d.h. als Dispersion den Aerogel-Partikeln zugegeben. Ferner ist es jedoch auch möglich, das Bindemittel als Trockenpulver beizumischen.

Des Weiteren wird vorgeschlagen, dass Aerogel-Partikel mit einer Partikelgröße zwischen 0,01 mm und 4 mm und/oder expandierte und/oder extrudierte Styrolpolymerisat-Partikel mit einer Partikelgröße zwischen2 mm und 10 mm verwendet werden. Weiterhin vorzugsweise sind die Partikelgrößen derart auf wenigstens zwei Größenklassen verteilt, dass kleinere und größere Partikel vorhanden sind, wobei die kleineren Partikel sich beim Mischen der Ausgangsstoffe zwischen die größeren Partikel setzen und auf diese Weise das Zwickelvolumen reduzieren. Die Schüttdichte der als Ausgangsstoff eingesetzten Aerogel-Partikel beträgt - wie bereits erwähnt - vorzugsweise 65 kg/m³ bis 100 kg/m³.

Vor dem Einbringen in die Form können den Ausgangsstoffen ferner Fasern, Füllstoffe und/oder Additive zugegeben. Fasern dienen der mechanischen Verstärkung bzw. Armierung des Dämmstoffs. Die Zugabe von Füllstoffen ist stark abhängig vom jeweils eingesetzten Bindemittel. Da der Anteil an Füllstoffen ggf. zu Lasten des Anteils der Aerogel-Partikel geht, sollte auf die Zugabe von Füllstoffen möglichst verzichtet werden. Als Additive finden insbesondere Benetzungsmittel, Entschäumer, Emulgatoren, Dispergatoren, Flammschutzmittel und/oder IR-Trübungsmittel Einsatz.

In Weiterbildung eines erfindungsgemäßen Verfahrens wird vorgeschlagen, dass die in die Form eingebrachte Mischung bzw. die in die Form eingebrachten Mischungen vor dem vollständigen Aushärten durch Druckeinwirkung verdichtet wird bzw. werden. Der Verdichtungsgrad ist derart gewählt, dass der Quotient aus dem Schüttvolumen der in die Form eingebrachten Rohmischung und dem Volumen des hieraus hergestellten ausgehärteten Dämmstoffs 2-4, vorzugsweise 2,2-3,8, weiterhin vorzugsweise 2,5-3,5 beträgt. Die Verdichtung hat zur Folge, dass der Hohlraumanteil, d. h. das mit Luft gefüllte Zwickelvolumen, verringert wird. Ferner wird der Bildung von Bindemittelclustern entgegengewirkt, da das Bindemittel beim Verdichten aus dem Zwickelvolumen heraus gedrückt wird. Das erfindungsgemäße Verfahren bewirkt demnach nicht nur eine Reduzierung des Hohlraumanteils, d. h. des mit Luft gefüllten Zwickelvolumens, sondern ferner des mit Bindemittel gefüllten Zwickelvolumens. Dies wiederum wirkt sich günstig auf die Wärmedämmeigenschaften des Dämmstoffs bzw. des Dämmelementes aus. Denn der Wärmefluss findet vorrangig durch die Aerogel-Partikel statt, die diesen jedoch nicht fördern, sondern - aufgrund der niedrigen Wärmeleitfähigkeit - blockieren. Weder Luft, noch Bindemittel vermögen dies in gleich hohem Maße zu leisten. Die über die Verdichtung bewirkte kompakte Anordnung der Aerogel-Partikel führt demnach zu einer besonders wirksamen Hemmung des Wärmeflusses. Dies ist erkennbar anhand der hervorragenden Wärmedämmeigenschaften eines nach einem erfindungsgemäßen Verfahren hergestellten Dämmstoffs bzw. Dämmelements.

Das Verdichten der Mischung erfolgt vorzugsweise in der Form. Hierzu wird bevorzugt die Form mit einem Deckel verschlossen und Druck auf den Deckel aufgebracht. Der Druck wird solange aufrechterhalten und/oder variiert, bis der gewünschte Verdichtungsgrad erreicht ist.

Zur Herstellung eines mehrschichtig aufgebauten Dämmelements kann ein erfindungsgemäß hergestellter Dämmstoff oder ein erfindungsgemäßes Dämmelement nachträglich zumindest einseitig beschichtet werden. Beispielsweise kann eine Styrolpolymerisat-Partikel enthaltene Schicht durch Laminierung aufgebracht werden. Die Beschichtung dient insbesondere der Verbesserung der mechanischen und haptischen Eigenschaften eines homogen aufgebauten Dämmstoffs oder Dämmelements.

Alternativ oder ergänzend kann bei der Herstellung des Dämmstoffs bzw. des Dämmelementes wenigstens ein als Armierung und/oder Kaschierung dienendes Gewebe oder Vlies in die Form eingelegt und/oder nachträglich ein Gewebe oder Vlies nach dem Ausformen auf wenigstens eine Außenseite des Dämmstoffs bzw. des Dämmelementes aufgebracht werden. Ein solches Gewebe oder Vlies verbessert ebenfalls die mechanische Stabilität des Dämmstoffs bzw. Dämmelementes sowie die Haptik. Ein bereits in die Form eingelegtes Gewebe oder Vlies erleichtert ferner das Ausformen.

Die Erfindung wird nachfolgend anhand bevorzugter Ausführungsbeispiele erfindungsgemäßer Verfahren zur Herstellung eines Dämmstoff bzw. eines Dämmelements näher beschrieben.

### Beispiel 1

### (homogener Aufbau, ohne Styrolpolymerisat-Partikel)

| | |
|---|---|
| 45 g | hydrophobiertes Silica-Aerogel-Granulat mit einer Partikelgröße ≤ 1,2 mm und einer Schüttdichte von 80 kg/m³, |
| 15 g | wässrige Polymerdispersion auf Basis von thermoplastischen Styrolbutylacrylatpolymeren mit einem Polymergehalt von 50 Gew.-% und |
| 5 g | Wasser |

wurden homogen gemischt, in eine Metallform der Abmessung 12 cm x 12 cm x 7 cm gegeben, die zuvor zur leichteren Entformbarkeit allseitig mit einem Trennvlies ausgekleidet wurde, und unter Druck auf einen Formkörper mit einer Dicke von 3 cm verdichtet. Die Mischung wurde dann zum Aushärten in der geschlossenen Form über die Dauer von 24 Stunden einer Temperatur von 50°C ausgesetzt.

Der auf diese Weise hergestellte Probekörper wies eine Rohdichte nach DIN EN 1602 von 125 kg/m³ und eine Wärmeleitfähigkeit nach DIN EN 12667 von 0,0163 W/(mK) auf. Die Querzugfestigkeit nach DIN EN 1607 betrug 25 kPa und die Biegezugfestigkeit nach DIN EN 12089 betrug 35 kPa. Die Biegezugfestigkeit wurde im 3-Punkt-Biegeversuch getestet. Die Druckfestigkeit bei 10% Stauchung nach DIN EN 826 betrug 161 kPa. Der Aerogel-Anteil betrug 85,7 Gew.-% bezogen auf die Trockenmasse der Ausgangsstoffe.

### Beispiel 2

### (Abwandlung des Beispiels 1)

Es wurden die gleichen Ausgangsstoffe in den vorstehend genannten Gewichtsanteilen homogen gemischt und in eine Metallform der Abmessung 12 cm x 12 cm x 7 cm gegeben, die zuvor zur leichteren Entformbarkeit allseitig mit einem Trennvlies ausgekleidet wurde. Unter Druck wurde die eingegebene Mischung auf einen Formkörper mit einer Dicke von 2,5 cm statt 3 cm verdichtet. Die Mischung wurde dann zum Aushärten in der geschlossenen Form über die Dauer von 24 Stunden einer Temperatur von 50°C ausgesetzt.

Der auf diese Weise hergestellte Probekörper wies eine Rohdichte nach DIN EN 1602 von 146 kg/m³ und eine Wärmeleitfähigkeit nach DIN EN 12667 von 0,01544 W/(mK) auf. Die Querzugfestigkeit nach DIN EN 1607 betrug 44 kPa und die Biegezugfestigkeit nach DIN EN 12089 betrug 46 kPa. Die Biegezugfestigkeit wurde im 3-Punkt-Biegeversuch getestet. Die Druckfestigkeit bei 10% Stauchung nach DIN EN 826 des Probekörpers betrug 210 kPa.

Die Gegenüberstellung der gemessenen Festigkeitswerte der nach den Beispielen 1 und 2 hergestellten Probekörper zeigt, dass bei Verwendung der gleichen Ausgangsstoffe allein durch den Grad der Verdichtung Einfluss auf die Festigkeit des Probekörpers genommen werden konnte. Dabei hatte der Grad der Verdichtung keinen negativen Einfluss auf die Wärmedämmeigenschaften des Probekörpers. Im Gegenteil selbst die Wärmedämmeigenschaften konnten verbessert werden, da mit dem Verdichten das mit Luft oder Bindemittel gefüllte Zwickelvolumen reduziert wird und das Aerogel den Wärmefluss stärker blockiert als Luft oder ein Bindemittel.

Bei dem Probekörper gemäß Beispiel 2 betrug der Hohlraumanteil 14,7 Vol.-%.

Dieser wurde wie folgt bestimmt:
Aus dem Probekörper wurde ein Stück mit den Abmessungen 1,54 cm x 1,56 cm x 11,91 cm, d h. einem Volumen von 28,7 cm³, herausgeschnitten. Das Stück wurde in einen Messzylinder mit einem Fassungsvermögen von 50 cm³ gegeben. Der Messzylinder einschließlich des Stücks wurde auf einer Waage gestellt und mit Isopropanol aufgefüllt, das als polare Flüssigkeit in die Hohlräume des Dämmstoffs jedoch nicht in die nanoskaligen Poren der Aerogel-Partikel einzudringen vermag. Das Gewicht des zugegebenen Isopropanols wurde erfasst, wobei insgesamt 35,7 g Isopropanol zugegeben wurden, was 45,8 cm³ entspricht. Zur Ermittlung des Hohlraumvolumens wurde das ermittelte Volumen des Isopropanols von dem Fassungsvermögen des Messzylinders abgezogen: 50 cm³-45,8 cm³=4,2 cm³. Schließlich wurde der Volumenanteil aus dem Quotienten aus Hohlraumvolumen und Gesamtvolumen des Probestücks ermittelt: 4,2 cm³ / 28,7 cm³=0,146, was einen Volumenanteil von 14,6 Vol.-% ergibt.

Diese Bestimmung wurde an drei etwa gleich großen Probestücken durchgeführt. Im Mittel betrug der Hohlraumvolumenanteil 14,7 Vol.-%.

Um ferner den Volumenanteil des Bindemittels zu bestimmen, wurde die Messung erneut an etwa gleich großen Probestücken jedoch unter Verwendung von Acetonitril anstelle von Isopropanol durchgeführt. Dieses ist noch polarer als Isopropanol und besitzt zudem die Eigenschaft, das im Probestück enthaltene Bindemittel aufzulösen. Insgesamt wurden 35,3 g Acetonitril zugegeben, was 45,3 cm³ entspricht. Daraus ergab sich ein Hohlraumvolumen von 4,7 cm³, was wiederum einem Hohlraumanteil von 16,5 Vol.-% entspricht. Zieht man hiervon den zuvor unter Zuhilfenahme des Isopropanols ermittelten Volumenanteil ab, erhält man den Volumenanteil des Bindemittels, nämlich 1,8 Vol.-%.

### Beispiel 3

### (mit Styrolpolymerisat-Partikel, gleichmäßig verteilt)

| | |
|---|---|
| 45 g | hydrophobiertes Silica-Aerogel-Granulat mit einer Partikelgröße ≤ 1,2 mm und einer Schüttdichte von 80 kg/m³, |
| 2 g | vorgeschäumtes Polystyrolgranulat mit einer Partikelgröße von 4-8 mm und einer Schüttdichte 0,0157 g/cm³, |
| 15 g | wässrige Polymerdispersion auf Basis von thermoplastischen Styrolbutylacrylatpolymeren mit einem Polymergehalt von 50 Gew.-% und |
| 5 g | Wasser |

wurden homogen gemischt, in eine Metallform der Abmessung 12 cm x 12 cm x 7 cm gegeben, die zuvor zur leichteren Entformbarkeit allseitig mit einem Trennvlies ausgekleidet wurde, und unter Druck auf einen Formkörper mit einer Dicke von 3 cm verdichtet. Die Mischung wurde dann zum Aushärten in der geschlossenen Form über die Dauer von 24 Stunden einer Temperatur von 50°C ausgesetzt.

Der auf diese Weise hergestellte Probekörper wies eine Rohdichte nach DIN EN 1602 von 125 kg/m³ und eine Wärmeleitfähigkeit nach DIN EN 12667 von 0,0168 W/(mK) auf. Der Aerogel-Anteil betrug 82,6 Gew.-% bezogen auf die Trockenmasse der Ausgangsstoffe.

### Beispiel 4

### (mit Styrolpolymerisat-Partikel in außenliegenden Deckschichten)

Zur Ausbildung einer ersten Deckschicht wurden:

| | |
|---|---|
| 1,8 g | vorgeschäumtes Polystyrolgranulat mit einer Partikelgröße von 4-8 mm und einer Schüttdichte 0,0157 g/cm³, |
| 0,3 g | wässrige Polymerdispersion auf Basis von thermoplastischen Styrolbutylacrylatpolymeren mit einem Polymergehalt von 50 Gew.-% und |
| 0,1 g | Wasser |

homogen gemischt und in eine Metallform der Abmessung 12 cm x 12 cm x 7 cm gegeben, die zuvor zur leichteren Entformbarkeit allseitig mit einem Trennvliese ausgekleidet wurde.

Zur Ausbildung einer Kernschicht wurden:

| | |
|---|---|
| 45 g | hydrophobiertes Silica-Aerogel-Granulat mit einer Partikelgröße ≤ 1,2 mm und einer Schüttdichte von 80 kg/m³, |
| 15 g | wässrige Polymerdispersion auf Basis von thermoplastischen Styrolbutylacrylatpolymeren mit einem Polymergehalt von 50 Gew.-% und |
| 5 g | Wasser |

homogen gemischt und auf die Deckschicht in die Form gegeben. Hierauf wurde zur Ausbildung einer weiteren Deckschicht nochmals eine Mischung entsprechend der der ersten Deckschicht aufgebracht. Unter Druck wurde der Forminhalt auf einen Formkörper mit einer Dicke von 3 cm verdichtet. Die Mischung wurde dann zum Aushärten in der geschlossenen Form über die Dauer von 2 Stunden einer Temperatur von 90°C ausgesetzt.

Der auf diese Weise hergestellte mehrschichtige Probekörper wies eine Rohdichte nach DIN EN 1602 von 113 kg/m³ und eine Wärmeleitfähigkeit nach DIN EN 12667 von 0,0168 W/(mK) auf. Die Querzugfestigkeit nach DIN EN 1607 betrug 33 kPa und die Biegezugfestigkeit im 3-Punkt-Biegeversuch nach DIN EN 12089 betrug 121 kPa. Der Aerogel-Anteil betrug 80,5 Gew.-% bezogen auf die Trockenmasse der Ausgangsstoffe.

### Beispiel 5

### (mit Styrolpolymerisat-Partikel in außenliegenden Deckschichten)

Die Ausgangsstoffe zur Ausbildung der Schichten entsprachen denen des Beispiels 4. Als Form wurde jedoch eine mikrowellentaugliche Kunststoffform identischer Abmessungen verwendet. Nach dem Verdichten wurde der Forminhalt 10 Minuten bei 600 Watt Leistung in der Mikrowelle gehärtet und getrocknet. Der auf diese Weise hergestellte Probekörper wies im Wesentlichen dieselben Eigenschaften wie der nach Beispiel 4 hergestellte Probekörper auf.

### Beispiel 6

### (mit Styrolpolymerisat-Partikel in einer Deckschicht)

Zur Ausbildung der Deckschicht wurden:

| | |
|---|---|
| 3,6 g | vorgeschäumtes Polystyrolgranulat mit einer Partikelgröße von 4-8 mm und einer Schüttdichte 0,0157 g/cm³, |
| 0,6 g | wässrige Polymerdispersion auf Basis von thermoplastischen Styrolbutylacrylatpolymeren mit einem Polymergehalt von 50 Gew.-% und |
| 0,2 g | Wasser |

homogen gemischt und in eine Metallform der Abmessung 12 cm x 12 cm x 7 cm gegeben, die zuvor zur leichteren Entformbarkeit allseitig mit einem Trennvliese ausgekleidet wurde.

Zur Ausbildung einer weiteren Schicht wurden:

| | |
|---|---|
| 45 g | hydrophobiertes Silica-Aerogel-Granulat mit einer Partikelgröße ≤ 1,2 mm und einer Schüttdichte von 80 kg/m³, |
| 15 g | wässrige Polymerdispersion auf Basis von thermoplastischen Styrolbutylacrylatpolymeren mit einem Polymergehalt von 50 Gew.-% und |
| 5 g | Wasser |

homogen gemischt und auf die Deckschicht in die Form gegeben. Unter Druck wurde der Forminhalt auf einen Formkörper mit einer Dicke von 3 cm verdichtet. Die Mischung wurde dann zum Aushärten in der geschlossenen Form über die Dauer von 2 Stunden einer Temperatur von 90°C ausgesetzt.

Der auf diese Weise hergestellte mehrschichtige Probekörper wies eine Rohdichte nach DIN EN 1602 von 115 kg/m³ und eine Wärmeleitfähigkeit nach DIN EN 12667 von 0,0172 W/(mK) auf. Die Querzugfestigkeit nach DIN EN 1607 betrug 40 kPa und die Biegezugfestigkeit im 3-Punkt-Biegeversuch nach DIN EN 12089 betrug 65 kPa. Der Aerogel-Anteil betrug 79,1 Gew.-% bezogen auf die Trockenmasse der Ausgangsstoffe.

Die Probekörper sämtlicher Beispiele zeichneten sich - sowohl bei homogenem, als auch bei mehrschichtigem Aufbau - durch hervorragende Wärmedämmeigenschaften sowie hervorragende mechanische Eigenschaften aus. Darüber hinaus wiesen sämtliche Probekörper einen Wasseraufnahmewert gemäß DIN EN 1609 < 0,1 kg/m² und eine Wasserdampfdiffusions-Widerstandszahl µ < 10 auf.

Abweichend zu den vorstehend genannten Beispielen kann auf die Zugabe eines Bindemittels in der Styrolpolymerisat-Partikel enthaltenden Schicht auch verzichtet werden. Der Verbund der Partikel erfolgt dann mittels thermischen Verklebens der Partikel. Hierzu wird die Mischung nach dem Eingeben in eine Form einer Temperatur von 80-110°C, vorzugsweise von 85-95°C ausgesetzt.

Die vorgeschlagenen Dämmstoffe bzw. Dämmelemente eignen sich aufgrund der hervorragenden Wärmedämmwerte insbesondere zur Wärmedämmung von Gebäudewänden oder -decken. Aufgrund der verbesserten mechanischen Festigkeit weisen die erfindungsgemäßen Dämmstoffe bzw. Dämmelemente eine höhere Eigenfestigkeit, insbesondere eine höhere Kanten- und Eckstabilität auf. Dadurch wird die Handhabung des Dämmelements auf der Baustelle vereinfacht und die Applikationssicherheit steigt.

Die vorgeschlagenen, expandierte oder extrudierte Styrolpolymerisat-Partikel enthaltenden Deckschichten machen eine Kaschierung oder Laminierung des Aerogel-Partikel enthaltenden Formkörpers mittels Vliesen und/oder Geweben entbehrlich. Da es hierbei immer wieder zu Haftungsproblemen gekommen ist, erweist sich dies als Vorteil. Zudem ist die Oberfläche einer Styrolpolymerisat-Partikel enthaltenden Deckschicht schleifbar, so dass die Oberfläche der Aufnahme moderner Putzsysteme dienen kann. Ein weiterer Vorteil besteht darin, dass es weder zur Herstellung noch zur Verarbeitung eines erfindungsgemäßen Dämmstoffs bzw. eines erfindungsgemäßen Dämmelementes eines Spezialwerkzeugs bedarf.

## Patentansprüche

1. Dämmstoff zur Herstellung eines Dämmelementes, wobei der Dämmstoff Aerogel-Partikel und wenigstens ein anorganisches und/oder organisches Bindemittel enthält,
**dadurch gekennzeichnet, dass** der Bindemittelanteil < 3 Vol.-%, vorzugsweise < 2,5 Vol.-%, weiterhin vorzugsweise < 2 Vol.-% bezogen auf das Gesamtvolumen des Dämmstoffs beträgt.

2. Dämmstoff nach Anspruch 1,
**dadurch gekennzeichnet, dass** der Dämmstoff expandierte und/oder extrudierte Styrolpolymerisat-Partikel enthält, wobei die expandierten und/oder extrudierten Styrolpolymerisat-Partikel vorzugsweise gleichmäßig verteilt im Dämmstoff angeordnet sind, so dass der Dämmstoff einen homogenen Aufbau besitzt.

3. Dämmstoff nach Anspruch 1 oder 2,
**dadurch gekennzeichnet, dass** der Dämmstoff bei der Herstellung verdichtet worden ist und der Hohlraumanteil < 40 Vol.-%, vorzugsweise < 20 Vol.-%, weiterhin vorzugsweise < 10 Vol.-%, bezogen auf das Gesamtvolumen des Dämmstoffs beträgt.

4. Dämmstoff nach einem der vorhergehenden Ansprüche,
**dadurch gekennzeichnet, dass** die Wärmeleitfähigkeit des Dämmstoffs ≤ 0,022 W/(mK), vorzugsweise ≤ 0,020 W/(mK), weiterhin vorzugsweise ≤ 0,018 W/(mK), beträgt.

5. Dämmstoff nach einem der vorhergehenden Ansprüche,
**dadurch gekennzeichnet, dass** die Querzugfestigkeit des Dämmstoffs ≥ 10kPa, vorzugsweise ≥ 20 kPa, weiterhin vorzugsweise ≥25 kPa, beträgt.

6. Dämmstoff nach einem der vorhergehenden Ansprüche,
**dadurch gekennzeichnet, dass** die Biegezugfestigkeit des Dämmstoffs ≥ 15 kPa, vorzugsweise ≥ 20 kPa, weiterhin vorzugweise ≥ 25 kPa, beträgt.

7. Dämmstoff nach einem der vorhergehenden Ansprüche,
**dadurch gekennzeichnet, dass** die Druckfestigkeit des Dämmstoffs ≥ 80 kPa, vorzugsweise ≥ 120 kPa, weiterhin vorzugsweise ≥ 150 kPa, beträgt.

8. Dämmstoff nach einem der vorhergehenden Ansprüche,
**dadurch gekennzeichnet, dass** zumindest ein Teil der Aerogel-Partikel aus wenigstens einem Aerogel-Recyclat besteht.

9. Dämmelement zur Schall- und/oder Wärmedämmung von Gebäudewänden oder -decken aus einem Dämmstoff nach einem der vorhergehenden Ansprüche, wobei das Dämmelement einen homogenen oder schichtweisen Aufbau besitzt und/oder den Dämmstoff in wenigstens einer Schicht enthält.

10. Dämmelement nach Anspruch 9,
**dadurch gekennzeichnet, dass** das Dämmelement expandierte und/oder extrudierte Styrolpolymerisat-Partikel enthält, von denen zumindest ein Teil eine Schicht, insbesondere eine außenliegende Deckschicht, ausbildet.

11. Dämmelement nach Anspruch 10,
**dadurch gekennzeichnet, dass** die Styrolpolymerisat-Partikel enthaltende Schicht, insbesondere Deckschicht, ferner wenigstens ein Bindemittel enthält und/oder weitgehend frei von Aerogel-Partikeln ist und/oder eine Schichtstärke von 5-30 mm besitzt.

12. Verfahren zur Herstellung eines Dämmstoffs nach einem der Ansprüche 1 bis 8 und/oder eines Dämmelementes nach einem der Ansprüche 9 bis 11,
**dadurch gekennzeichnet, dass** die Ausgangsstoffe, umfassend wenigstens ein Bindemittel sowie Aerogel-Partikel und/oder expandierte und/oder extrudierte Styrolpolymerisat-Partikel, homogen gemischt oder in unterschiedlichen Mischungsverhältnissen schichtweise in eine Form eingebracht und unter Einwirkung von Druck und/oder Wärme getrocknet und/oder ausgehärtet werden.

13. Verfahren nach Anspruch 12,
**dadurch gekennzeichnet, dass** als Ausgangsstoffe 70-95 Gew.-%, vorzugsweise 80-90 Gew.-%, weiterhin vorzugsweise 82-88 Gew.-% Aerogel-Partikel und 5-30 Gew.-%, vorzugsweise 10-20 Gew.-%, weiterhin vorzugsweise 12-18 Gew.-% wenigstens eines anorganischen und/oder organischen Bindemittels jeweils bezogen auf die Trockenmasse der Ausgangsstoffe verwendet werden.

14. Verfahren nach Anspruch 12,
**dadurch gekennzeichnet, dass** zur Ausbildung einer ersten Schicht 70-95 Gew.-%, vorzugsweise 80-90 Gew.-%, weiterhin vorzugsweise 82-88 Gew.-% Aerogel-Partikel und 5-30 Gew.-%, vorzugsweise 10-20 Gew.-%, weiterhin vorzugsweise 12-18 Gew.-% Bindemittel und zur Ausbildung einer Deckschicht 70-100 Gew.-%, vorzugsweise 80-100 Gew.-%, weiterhin vorzugsweise 90-100 Gew.-% expandierte und/oder extrudierte Styrolpolymerisat-Partikel und 0-30 Gew.-%, vorzugsweise 0-20 Gew.-%, weiterhin vorzugsweise 0-10 Gew.-% Bindemittel jeweils bezogen auf die Trockenmasse der Ausgangsstoffe der jeweiligen Schicht gemischt und schichtweise in eine Form eingebracht werden.

15. Verfahren nach einem der Ansprüche 12 bis 14,
**dadurch gekennzeichnet, dass** Aerogel-Partikel verwendet werden, die wenigstens 10 Gew.-%, vorzugsweise wenigstens 25 Gew.-%, weiterhin vorzugsweise wenigstens 50 Gew.-% wenigstens eines Aerogel-Recyclats bezogen auf das Gesamtgewicht der Aerogel-Partikel enthalten, das zuvor durch Brechen, Schneiden, Mahlen und/oder Sieben in Partikel definierter Größe zerkleinert wird.

16. Verfahren nach einem der Ansprüche 12 bis 15,
**dadurch gekennzeichnet, dass** wenigstens ein organisches Bindemittel, insbesondere ein wasserbasiertes duroplastisches Bindemittel, wie beispielsweise Epoxidharz oder Polyurethan, und/oder ein Dispersionsbindemittel auf Basis thermoplastischer Acrylat-, Styrolacrylatoder Styrolbutylacrylatpolymere, verwendet wird.

17. Verfahren nach einem der Ansprüche 12 bis 16,
**dadurch gekennzeichnet, dass** Aerogel-Partikel mit einer Partikelgröße zwischen 0,01 mm und 4 mm und/oder expandierte und/oder extrudierte Styrolpolymerisat-Partikel mit einer Partikelgröße zwischen 2 mm und 10 mm verwendet werden.

18. Verfahren nach einem der Ansprüche 12 bis 17,
**dadurch gekennzeichnet, dass** den Ausgangsstoffen vor dem Einbringen in die Form Fasern, Füllstoffe und/oder Additive zugegeben werden.

19. Verfahren nach einem der Ansprüche 12 bis 18,
**dadurch gekennzeichnet, dass** die in die Form eingebrachte Mischung oder die in die Form eingebrachten Mischungen vor dem vollständigen Aushärten durch Druckeinwirkung verdichtet wird bzw. werden, so dass der Quotient aus dem Schüttvolumen der in die Form eingebrachten Rohmischung bzw. Rohmischungen und dem Volumen des hieraus hergestellten ausgehärteten Dämmstoffs 2-4, vorzugsweise 2,2-3,8, weiterhin vorzugsweise 2,5-3,5 beträgt.

20. Verfahren nach einem der Ansprüche 12 bis 19,
**dadurch gekennzeichnet, dass** der Dämmstoff oder das Dämmelement nachträglich zumindest einseitig beschichtet wird.

21. Verfahren nach einem der Ansprüche 12 bis 20,
**dadurch gekennzeichnet, dass** in die Form wenigstens ein als Armierung und/oder Kaschierung dienendes Gewebe oder Vlies eingelegt wird und/oder ein Gewebe oder Vlies nachträglich nach dem Ausformen auf wenigstens eine Außenseite des Dämmstoffs aufgebracht wird.
